# EUROPEAN PATENT SPECIFICATION

(11) **EP 3 367 581 B1**
(45) Date of publication and mention of the grant of the patent: **08.01.2020**
(21) Application number: 15908076.1
(22) Date of filing: 12.11.2015
(51) Int. Cl.: H04B 3/32, H04B 1/38, H04M 11/06, H04L 27/26

(54) **METHOD AND DEVICE FOR DIGITAL SUBSCRIBER LINE INITIALIZATION**
VERFAHREN UND VORRICHTUNG ZUR INITIALISIERUNG EINER DIGITALEN TEILNEHMERLEITUNG
PROCÉDÉ ET DISPOSITIF POUR INITIALISATION DE LIGNE D'ABONNÉ NUMÉRIQUE

(43) Date of publication of application: 29.08.2018
(73) Proprietor: Huawei Technologies Co., Ltd., Longgang District Shenzhen, Guangdong 518129 (CN)
(72) Inventor: YI, Xilin, Shenzhen Guangdong 518129 (CN); JIA, Xin, Shenzhen Guangdong 518129 (CN); ZHOU, Bin, Shenzhen Guangdong 518129 (CN); WANG, Xiang, Shenzhen Guangdong 518129 (CN)
(74) Representative: Körber, Martin Hans
(86) International application number: PCT/CN2015/094484
(87) International publication number: WO 2017/079946

(56) References cited:
- WO-A1-2014/201662
- CN-A- 101 453 245
- CN-A- 103 503 398
- CN-A- 105 009 465
- US-A1- 2014 185 659
- US-A1- 2014 328 442

## Description

### TECHNICAL FIELD

Embodiments of the present invention relate to the communications field, and more specifically, to a method, a subscriber side transceiver, and a vectoring control entity (VCE) for digital subscriber line (DSL) initialization.

### BACKGROUND

A DSL is a high-speed data transmission technology for transmission over a phone twisted pair, for example, an unshielded twisted pair (UTP). There are a plurality of DSL lines in a DSL system. Currently, a DSL access multiplexer (DSLAM) is generally used to provide an access service for the plurality of DSL lines.

To meet a requirement for a higher rate in a medium and long term, the International Telecommunication Union ITU-T founds a G. fast project to study a topic of providing final fast access by using a copper wire in a fiber to the distribution point (FTTdp) scenario. A target of the study is to provide an access rate of at least 500 Mbps within 100 m. An ITU-T Q4 uses time division duplex (TDD) as a duplex manner of a next generation copper-wire broadband access standard G. fast. However, because of an electromagnetic induction principle, crosstalk is generated between a plurality of signals that access the DSLAM. A higher frequency band indicates stronger near-end crosstalk (NEXT) and far-end crosstalk (FEXT) energy. A G. fast uplink/downlink channel uses a TDD manner, and the NEXT may be avoided by using super frame synchronization on a DP point. However, as a wider frequency band is used in G. fast, the FEXT causes severer impact on transmission performance of a line. During xDSL transmission, the crosstalk is a type of noise. Therefore, a channel rate is greatly reduced due to severe far-end crosstalk. When users of a plurality of cables in a cable binder require an xDSL service to be enabled, some lines have a low rate and unstable performance, and even cannot be enabled due to the FEXT, and the like. Consequently, a line availability rate of the DSLAM is relatively small.

Specifically, in a scenario of a plurality of twisted pairs with hybrid line lengths, a long line suffers strong crosstalk from a short line. Consequently, signal detection on a joining line fails in an initialization phase, and initialization exits.

US 2014/328442 A1 discloses a method comprising modulating a plurality of synchronized signals by an orthogonal probe sequence (OPS) to generate a plurality of modulated synchronized signals, wherein the OPS comprises a zero element (0-element) column that indicates a start or an end of the OPS, and concurrently transmitting, using one or more transmitters, the plurality of modulated synchronized signals over a duration of a number of discrete multi-tone (DMT) symbols, wherein each of the plurality of modulated synchronized signals is intended for one of a plurality of receivers that are remotely coupled to the one or more transmitters via a vectored group of subscriber lines, and wherein the 0-element column causes all of the plurality of modulated synchronized signals to have a zero-amplitude during a first or a last of the DMT symbols.

### SUMMARY

Embodiments of the present invention provide a method, a subscriber side transceiver, and a vectoring control entity for DSL initialization, so as to reduce crosstalk caused by a showtime line for a joining line, and improve strength of detecting a synchronization symbol by a central office transceiver on the joining line.

According to a first aspect, a method for DSL initialization is provided, including: receiving, by a subscriber side transceiver, a first notification message sent by a vectoring control entity VCE, where the first notification message includes first indication information, the first indication information indicates at least one first index, the subscriber side transceiver is a transceiver that is on a showtime line and at a peer end of the VCE, and an element of the at least one first index in a joining uplink pilot sequence that needs to be sent by a transceiver that is on a joining line and at the peer end of the VCE is 1 or -1; converting, according to the first notification message, a first uplink pilot sequence that needs to be sent by the subscriber side transceiver into a second uplink pilot sequence, where an element of the at least one first index in the second uplink pilot sequence is zero; and sending the second uplink pilot sequence to a central office transceiver on the showtime line, wherein the converting a first uplink pilot sequence of the subscriber side transceiver on the showtime line into a second uplink pilot sequence according to the first notification message comprises modifying a non-zero element of the at least one first index in the first uplink pilot sequence to zero according to the first indication information.

In the embodiments of the present invention, before the initialization of the joining line enters an R-VECTOR 1 phase, the VCE instructs, by sending the first notification message, the subscriber side transceiver on the showtime line to convert the first uplink pilot sequence into the second uplink pilot sequence. In this way, when the joining line enters the R-VECTOR 1 phase, a pilot sequence that is of the showtime line and that is corresponding to a location of some non-zero pilot elements of the joining line is 0, and crosstalk suffered when a central office transceiver on the joining line detects an uplink pilot signal is reduced, so that noise can be reduced, a signal-to-noise ratio can be increased, and strength of detecting a synchronization symbol by the central office transceiver on the joining line can be further improved. With reference to the first aspect, in a first implementation of the first aspect, the first notification message further includes second indication information, the second indication information indicates at least one second index, an element of the at least one second index in the joining uplink pilot sequence is zero; and the converting, according to the first notification message, a first uplink pilot sequence that needs to be sent by the subscriber side transceiver into a second uplink pilot sequence further includes: modifying an element zero of the at least one second index in the first uplink pilot sequence to 1 or -1 according to the second indication information.

With reference to the first aspect, in a second implementation of the first aspect, the at least one second index includes indexes of all or some elements zero in the joining uplink pilot sequence.

In this way, the second uplink pilot sequence includes a non-zero element, and the VCE can complete, according to the second uplink pilot sequence, estimation of crosstalk caused by the showtime line for the joining line.

The method for DSL initialization in the embodiments of the present invention further includes: receiving, by the subscriber side transceiver, a second notification message sent by the VCE; converting the second uplink pilot sequence into a third uplink pilot sequence according to the second notification message, where at least one element 1 or -1 exists in the third uplink pilot sequence; and sending the third uplink pilot sequence to the central office transceiver.

In this way, when the crosstalk caused by the showtime line for the joining line cannot be estimated according to the second uplink pilot sequence, after determining that the central office transceiver on the joining line completes pilot sequence detection, the VCE sends the second notification message to the subscriber side transceiver on the showtime line. The subscriber side transceiver modifies the second uplink pilot sequence to the third uplink pilot sequence according to the second notification message. At least one element 1 or -1 exists in the third uplink pilot sequence. Then, the VCE completes the estimation of the crosstalk caused by the showtime line for the joining line.

According to a second aspect, a method for DSL initialization is provided, including: generating, by a vectoring control entity VCE, first indication information, where the first indication information indicates at least one first index, and an element of the at least one first index in a joining uplink pilot sequence that needs to be sent by a transceiver that is on a joining line and at a peer end of the VCE is 1 or -1; when it is determined that initialization of the joining line enters a channel discovery phase, generating a first notification message according to the first indication information, where the first notification message is used to instruct a subscriber side transceiver to convert a first uplink pilot sequence into a second uplink pilot sequence, the subscriber side transceiver is a transceiver that is on the showtime line and at the peer end of the VCE, and an element of the at least one first index in the second uplink pilot sequence is zero; and sending the first notification message to the subscriber side transceiver, wherein that the first notification message is used to instruct a subscriber side transceiver to convert a first uplink pilot sequence into a second uplink pilot sequence includes: the first indication information in the first notification message is used to instruct the subscriber side transceiver to modify a non-zero element of the at least one first index in the first uplink pilot sequence to zero.

In the embodiments of the present invention, before initialization of the joining line enters an R-VECTOR 1 phase, the VCE instructs, by sending the first notification message, the subscriber side transceiver on the showtime line to convert the first uplink pilot sequence into the second uplink pilot sequence. In this way, when the joining line enters the R-VECTOR 1 phase, a pilot sequence that is of the showtime line and that is corresponding to a location of some non-zero pilot elements of the joining line is 0, and crosstalk suffered when a central office transceiver on the joining line detects an uplink pilot signal is reduced, so that noise can be reduced, a signal-to-noise ratio can be increased, and strength of detecting a synchronization symbol by the central office transceiver on the joining line can be further improved. With reference to the second aspect, in a first implementation of the second aspect, the method further includes: generating second indication information, where the second indication information indicates at least one second index, and an element of the at least one second index in the joining uplink pilot sequence is zero; and the generating a first notification message includes: generating the first notification message according to the first indication information and the second indication information, where the second indication information in the first notification message is used to instruct the subscriber side transceiver to modify an element zero of the at least one second index in the first uplink pilot sequence to 1 or -1.

With reference to the second aspect, in a second implementation of the second aspect, the at least one second index includes indexes of all or some elements zero in the joining uplink pilot sequence.

In this way, the second uplink pilot sequence includes a non-zero element, and the VCE can complete, according to the second uplink pilot sequence, estimation of crosstalk caused by the showtime line for the joining line.

According to a third aspect, a subscriber side transceiver for DSL initialization is provided according to claim 7.

According to a fourth aspect, a vectoring control entity VCE for DSL initialization is provided according to claim 10.

### BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of a connection relationship of a plurality of twisted pairs in an xDSL system according to an embodiment of the present invention;
FIG. 2 is an interaction flowchart of a specific embodiment of a method for DSL initialization according to an embodiment of the present invention;
FIG. 3 is a schematic block diagram of a subscriber side transceiver for DSL initialization according to an embodiment of the present invention;
FIG. 4 is a schematic block diagram of another subscriber side transceiver for DSL initialization according to an embodiment;
FIG. 5 is a schematic block diagram of a VCE for DSL initialization according to an embodiment of the present invention;
FIG. 6 is a schematic block diagram of another VCE for DSL initialization according to an embodiment; and
FIG. 7 is a schematic block diagram of a system according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

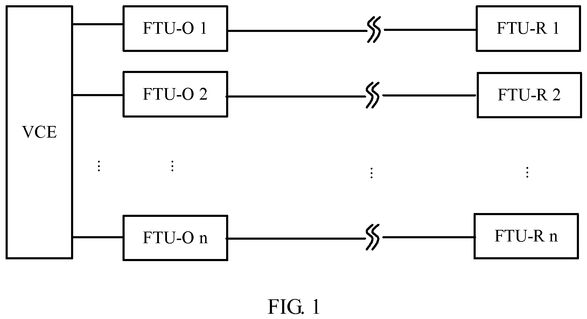

FIG. 1 shows a diagram of a connection relationship of a plurality of twisted pairs in an xDSL system. A vectoring control entity (VCE) can control a plurality of central office transceivers to transmit data with subscriber side transceivers. In this embodiment of the present invention, an example in which a central office transceiver is a G. fast transceiver unit at the operator side (FTU-O), and a subscriber side transceiver is a G. fast transceiver unit at the remote side (FTU-R) is used for description. The VCE may be a software module, and may be implemented by using a chip. An FTU-O and an FTU-R connected to each other by using a UTP are a twisted pair. The FTU-O may transmit data with the FTU-R by using the UTP.

The plurality of twisted pairs in the xDSL system include a showtime line and a joining line. The showtime line is a line on which the FTU-O and the FTU-R complete an initialization process and start to send data on a bearer channel. The joining line is a line on which the FTU-O and the FTU-R do not complete the initialization process. In this embodiment of the present invention, an FTU-O on the joining line is referred to as a first FTU-O, an FTU-R on the joining line is referred as a first FTU-R, an FTU-O on the showtime line is referred to as a second FTU-O, and an FTU-R on the showtime line is referred to as a second FTU-R.

When a user requires an xDSL service to be enabled, the first FTU-O and the first FTU-R on the joining line need to complete the initialization process. The initialization process includes a handshake phase, a channel discovery phase, and a channel analysis and channel exchange phase. The channel discovery phase is an important initialization phase. In this phase, to cancel crosstalk caused by the joining line for the showtime line, crosstalk caused by all showtime lines for the joining line also needs to be canceled.

In a scenario of a plurality of twisted pairs with hybrid line lengths, in an R-VECTOR-1 phase of the channel discovery phase, an only signal that can be used by the joining line is a synchronization symbol (Sync Symbol, SS). When the joining line is a long line in comparison with the showtime line, or a signal is greatly attenuated on the joining line, an uplink pilot signal in the SS of the joining line overlaps strong crosstalk of an uplink pilot signal on the showtime line. Consequently, it is difficult to accurately detect an uplink pilot signal in an uplink SS during joining line detection. In this case, the technical solution in the present invention may be applied.

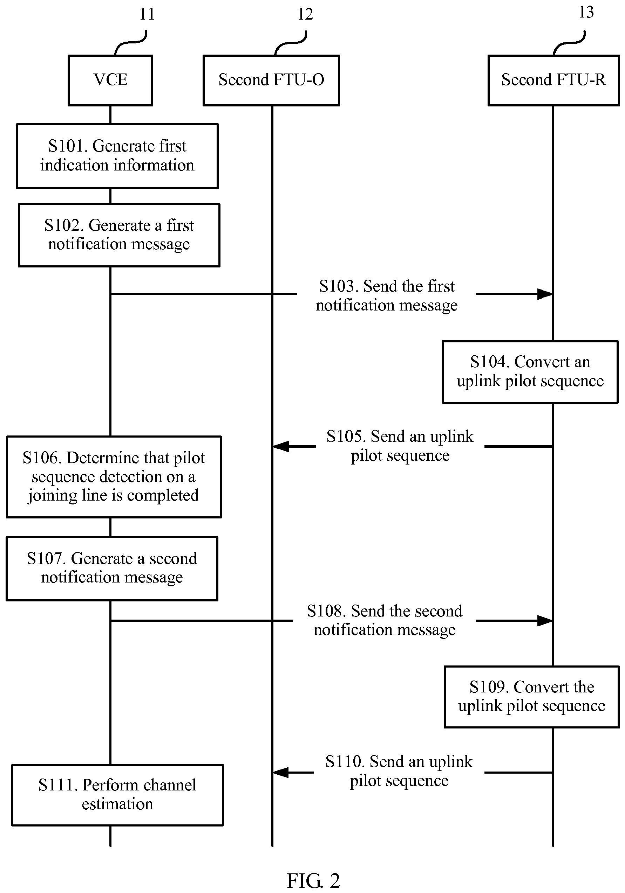

FIG. 2 shows a flowchart of a method 100 for DSL initialization according to an embodiment of the present invention. S101 to S105 in FIG. 2 are a necessary procedure to implement the method 100 for DSL initialization in this embodiment of the present invention. S106 to S111 are a procedure that needs to be further performed to complete channel estimation in the method 100 for DSL initialization in this embodiment of the present invention. Each step in the method 100 is described in detail below.

S101. A VCE 11 generates first indication information. Specifically, the VCE 11 determines that a joining line enters a channel discovery phase, and generates the first indication information according to an uplink pilot sequence of the joining line. The first indication information is used to indicate at least one first index. In this specification, an uplink pilot sequence that needs to be sent by a transceiver that is on the joining line and at a peer end of the VCE may be referred to as a joining uplink pilot sequence. An element of the at least one first index in the joining uplink pilot sequence is zero.

Specifically, the VCE can monitor each FTU-O in an xDSL system in real time. When a first FTU-O and a first FTU-R on the joining line completes a handshake phase and enters a channel discovery phase, the VCE can configure the joining uplink pilot sequence for the joining line, and send indication information that indicates the joining uplink pilot sequence to the first FTU-O. Then, the first FTU-O sends the indication information to the first FTU-R.

In this way, the first FTU-R can determine an uplink pilot sequence that needs to be sent to the first FTU-O in an R-VECTOR 1 phase.

It should be noted that, in this embodiment of the present invention, a pilot sequence is classified into an uplink pilot sequence and a downlink pilot sequence. A length of the pilot sequence may be 4 to 128. For example, when the length of the pilot sequence is 8, for example, when the pilot sequence is A₁, A₂, A₃, A₄, A₅, A₆, A₇, and A₈, Aᵢ is a value of an i^{th} element in the pilot sequence, where i is an index of the element. A value of Aᵢ may be 1, 0, or -1. When the value of Aᵢ is 1, it indicates that a carrier modulation bit of a pilot signal is 00, and a corresponding constellation point before code scrambling is (1+i); when the value of Aᵢ is 0, it indicates that there is no pilot signal; or when the value of Aᵢ is -1, it indicates that a carrier modulation bit of a pilot signal is 11, and a corresponding constellation point before code scrambling is (-1-i).

For example, when the first FTU-R sends an uplink pilot sequence 1, 1, -1, -1, 1, 1, -1, and -1 in a super frame P, and a index of an element in the sent uplink pilot sequence is 1, the first FTU-R includes, in an uplink SS in the super frame P, a pilot signal corresponding to the element A₁, and includes, in an uplink SS in a next super frame (P+1), a pilot signal corresponding to the element A₂. That is, each element in the uplink pilot sequence is successively sent in a super frame cyclically. It may be understood that an uplink SS in a super frame (P+7) includes the pilot signal corresponding to the element As.

Then, the VCE 11 generates the first indication information according to the joining uplink pilot sequence.

Optionally, the at least one first index includes indexes of all or some non-zero elements in the joining uplink pilot sequence.

For example, when the joining uplink pilot sequence is 1, 1, -1, -1, 0, 0, 0, and 0, indexes of the non-zero elements in the joining uplink pilot sequence are 1, 2, 3, and 4. The at least one first index indicated by the first indication information may be 1, 2, 3, and 4, or may be some of 1, 2, 3, and 4. The first indication information instructs a second FTU-R to modify, to zero, a value of a non-zero element corresponding to the at least one first index in a first uplink pilot sequence that needs to be sent by the second FTU-R.

Optionally, the VCE may further generate second indication information according to the joining uplink pilot sequence. The second indication information indicates at least one second index. An element of the at least one second index in the joining uplink pilot sequence is zero.

Optionally, the at least one second index includes indexes of all or some elements zero in the joining uplink pilot sequence.

For example, when the joining uplink pilot sequence is 1, 1, -1, -1, 0, 0, 0, and 0, the at least one second index may be 5, 6, 7, and 8, or may be some of 5, 6, 7, and 8. The second indication information instructs the second FTU-R on a showtime line to modify an element of the at least one second index in the first uplink pilot sequence to 1 or-1.

It should be noted that, in this embodiment of the present invention, the VCE 11 configures an uplink pilot sequence for each line in the xDSL system. Uplink pilot sequences in SSs sent by FTU-Rs on all the lines have a same length and are mutually orthogonal. In addition, indexes of elements in uplink pilot sequences in SSs sent by the FTU-Rs on all the lines at one moment are the same.

S102. The VCE 11 generates a first notification message. The first notification message is used to notify the second FTU-R that a new user needs to access an xDSL network, and initialization of the joining line enters the channel discovery phase. In addition, the first notification message includes the first indication information. The first notification message is used to instruct the second FTU-R on the showtime line to convert the first uplink pilot sequence into a second uplink pilot sequence. An element of the at least one first index in the second uplink pilot sequence is zero.

The first uplink pilot sequence is an uplink pilot sequence sent by the second FTU-R to a second FTU-O before the initialization of the joining line enters the R-VECTOR 1 phase. The second uplink pilot sequence is an uplink pilot sequence sent by the second FTU-R to the second FTU-O after the initialization of the joining line enters the R-VECTOR 1 phase.

Optionally, the converting the first uplink pilot sequence of the showtime line into a second uplink pilot sequence according to the first notification message above may be specifically: modifying a non-zero element of the at least one first index in the first uplink pilot sequence to zero according to the first indication information.

Optionally, the first notification message may further include the second indication information. In this case, the first indication information in the first notification message may be used to instruct the second FTU-R on the showtime line to modify a non-zero element of the at least one first index in the first uplink pilot sequence to zero. The second indication information in the first notification message is used to instruct the second FTU-R on the showtime line to modify an element zero of the at least one second index in the first uplink pilot sequence to non-zero.

It should be noted that, when there are a plurality of showtime lines in the xDSL system, the VCE may indicate that first uplink pilot sequences of some or all of the plurality of showtime lines are modified, and some or all elements in second uplink pilot sequences of the plurality of showtime lines may be zero.

For example, when there are three showtime lines in the xDSL system, and two of the three showtime lines are short lines in comparison with the joining line, the VCE may generate only first notification messages of the two showtime lines. In this way, crosstalk caused by the short showtime lines when the joining line detects an uplink pilot sequence in an SS can be greatly reduced.

S103. The VCE 11 sends the first notification message.

Specifically, the VCE 11 sends the first notification message to the second FTU-O 12 on the showtime line. The second FTU-O 12 forwards the first notification message to the second FTU-R 13. For example, the second FTU-O may send the first notification message to the second FTU-R 13 on the showtime line at a downlink transmission time in the super frame.

When determining that the first notification message needs to be sent to second FTU-Rs on a plurality of showtime lines, the VCE may send the first notification message to the plurality of showtime lines.

S104. A second FTU-R 13 modifies an uplink pilot sequence.

Specifically, after receiving the first notification message, the second FTU-R can determine that the new user needs to access the xDSL network, and that the initialization of the joining line enters the channel discovery phase.

When all the plurality of showtime lines receive the first notification message, the second FTU-Rs on the plurality of showtime lines modify the first uplink pilot sequence according to the first notification message.

In this way, before the joining line enters the R-VECTOR 1 phase, the second FTU-R 13 converts the first uplink pilot sequence of the showtime line into the second uplink pilot sequence according to the received first notification message. An element of the at least one first index in the second uplink pilot sequence is zero.

In a specific embodiment, there are two showtime lines in the xDSL system. First uplink pilot sequences of the two showtime lines are: 1, 1, 1, 1, 1, 1, 1, and 1, and 1, -1, 1, -1, 1, -1, -1, and -1. The joining uplink pilot sequence is 1, 1, -1, -1, 1, 1, -1, and -1.

In this case, the at least one first index indicated by the first indication information in the first notification message may be 1, 2, 3, and 4, which are indexes of some non-zero elements in the joining uplink pilot sequence. A non-zero element of the at least one first index in the first uplink pilot sequence is modified to zero according to the first notification message. That is, the uplink pilot sequences of the foregoing two showtime lines may be modified to 0, 0, 0, 0, 1, 1, 1, and 1, and 0, 0, 0, 0, 1, -1, -1, and -1. In this way, when an uplink pilot sequence in an SS sent by the first FTU-R on the joining line to the first FTU-O is 1, 1, -1, -1, 1, 1, -1, and -1, a pilot that is of a showtime line and that is corresponding to a location of some non-zero pilot elements of the joining line is 0. Therefore, crosstalk suffered when the first FTU-O detects an uplink pilot signal can be reduced, so as to reduce noise, and increase a signal-to-noise ratio.

Because the second uplink pilot sequence includes a non-zero element, crosstalk caused by the showtime line for the joining line may be estimated.

Optionally, the at least one first index indicated by the first indication information in the first notification message may be indexes of all the non-zero elements in the joining uplink pilot sequence. A non-zero element of the at least one first index in the first uplink pilot sequence is modified to zero according to the first notification message. That is, the uplink pilot sequences of the foregoing two showtime lines are modified to 0, 0, 0, 0, 0, 0, 0, and 0, and 0, 0, 0, 0, 0, 0, 0, and 0. In this way, when an uplink pilot sequence in an SS sent by the first FTU-R on the joining line to the first FTU-O is 1, 1, -1, -1, 1, 1, -1, and -1, a pilot that is of a showtime line and that is corresponding to a location of a non-zero pilot element of the joining line is 0. Therefore, crosstalk suffered when the first FTU-O detects an uplink pilot signal can be reduced, so as to reduce noise, and increase a signal-to-noise ratio.

In this way, because all elements in the second uplink pilot sequence are zero, crosstalk caused by the showtime line for the joining line cannot be estimated.

Optionally, the first notification message may further include the second indication information. The second indication information indicates the at least one second index. An element of the at least one second index in the joining uplink pilot sequence is zero. A non-zero element of the at least one first index in the first uplink pilot sequence may be modified to zero according to the first indication information. An element zero of the at least one second index in the first uplink pilot sequence may be modified to non-zero according to the second indication information.

In a specific embodiment, there are two showtime lines in the xDSL system. First uplink pilot sequences of the two showtime lines are: 1, 1, 1, 1, 0, 0, 0, and 0, and 1, -1, 1, -1, 0, 0, 0, and 0. The joining uplink pilot sequence is 1, 1, -1, -1, 0, 0, 0, and 0.

In this case, the at least one first index is 1, 2, 3, and 4, and the at least one second index is 5, 6, 7, and 8. The uplink pilot sequences of the foregoing two showtime lines are modified to 0, 0, 0, 0, 1, 1, 1, and 1, and 0, 0, 0, 0, 1, -1, 1, and -1 according to the first indication information and the second indication information. In this way, when an uplink pilot sequence in an SS sent by the first FTU-R on the joining line to the first FTU-O is 1, 1, -1, -1, 0, 0, 0, 0, a pilot that is of a showtime line and that is corresponding to a location of a non-zero pilot element of the joining line is 0. Therefore, crosstalk suffered when the first FTU-O detects an uplink pilot signal can be reduced, so as to reduce noise, and increase a signal-to-noise ratio.

Because the second uplink pilot sequence includes a non-zero element, crosstalk caused by the showtime line for the joining line may be estimated.

S105. When initialization of a joining line enters an R-VECTOR 1 phase, the second FTU-R 13 sends a second uplink pilot sequence to a second FTU-O 12. In this case, SSs sent by FTU-Rs on all lines are aligned. That is, when the first FTU-R on the joining line sends the uplink pilot sequence determined in S101 to the first FTU-O, the second FTU-R sends the second uplink pilot sequence to the second FTU-O.

It may be understood that, when the VCE instructs second FTU-Rs on all showtime lines to modify the uplink pilot sequence, the joining line does not suffer crosstalk from the showtime line when the first FTU-O on the joining line detects the uplink pilot signal, so as to minimize noise, and maximize a signal-to-noise ratio.

In this embodiment of the present invention, when the showtime line causes no crosstalk or less crosstalk for an uplink pilot signal on the joining line, the first FTU-O on the joining line can more accurately estimate a symbol alignment boundary of an SS of the joining line, more accurately calculate an offset between a symbol boundary of the joining line and a symbol boundary of the showtime line, and modulate an uplink symbol sending time according to the offset, so that data sent on the joining line can be better synchronized with data sent on the showtime line.

In addition, the first FTU-O on the joining line can more accurately detect a pilot signal in an uplink SS sent by the first FTU-R, so as to avoid exiting from initialization because the first FTU-O cannot detect, due to strong crosstalk of the showtime line, an uplink pilot sequence in an SS sent by the first FTU-R.

Therefore, in this embodiment of the present invention, before the initialization of the joining line enters the R-VECTOR 1 phase, the VCE instructs, by sending the first notification message, the subscriber side transceiver on the showtime line to convert the first uplink pilot sequence into the second uplink pilot sequence. In this way, when the joining line enters the R-VECTOR 1 phase, a pilot sequence that is of the showtime line and that is corresponding to a location of some non-zero pilot elements of the joining line is 0, and crosstalk suffered when the central office transceiver on the joining line detects the uplink pilot signal is reduced, so that noise can be reduced, a signal-to-noise ratio can be increased, and strength of detecting a synchronization symbol by the central office transceiver on the joining line can be further improved. Optionally, in S104, when crosstalk caused by the showtime line for the joining line cannot be estimated according to the second uplink pilot sequence, to estimate the crosstalk caused by the showtime line for the joining line, the VCE needs to perform a procedure of S106 to S110 in the following specification.

Specifically, when the joining uplink pilot sequence suffers no crosstalk or less crosstalk, this helps to detect the uplink pilot sequence, but crosstalk caused by a signal transmitted on the showtime line for the joining line cannot be estimated. Therefore, after determining that a joining port completes synchronization symbol detection, the VCE may modify an uplink pilot signal on the showtime line again, so as to subsequently estimate the crosstalk caused by the showtime line for the joining line. S106. The VCE 11 determines that a first FTU-O on the joining line completes uplink synchronization symbol detection.

Specifically, the VCE may actively obtain all parameters in the initialization process of the joining line, for example, a symbol alignment parameter and a TGupdate parameter, so as to determine that the first FTU-O completes uplink pilot signal detection.

Alternatively, optionally, after completing uplink pilot signal detection, the first FTU-O on the joining line may actively report indication information to the VCE. When receiving the indication information sent by the first FTU-O, the VCE may determine that the first FTU-O completes uplink pilot sequence detection.

S107. The VCE 11 generates a second notification message. The second notification message instructs the second FTU-R 13 on the showtime line to modify the second uplink pilot sequence to a third uplink pilot sequence. At least one element 1 or -1 exists in the third uplink pilot sequence.

It should be noted that after the second FTU-R modifies the second uplink pilot sequence to the third uplink pilot sequence, uplink pilot sequences sent by all first FTU-Rs on an xDSL line are mutually orthogonal.

S108. The VCE 11 sends the second notification message to the second FTU-R. When the crosstalk caused by the showtime line for the joining line cannot be estimated according to the second uplink pilot sequence, the third uplink pilot sequence is an uplink pilot sequence sent by the second FTU-R to the second FTU-O after the R-VECTOR 1 phase of the initialization of the joining line is completed. In addition, the VCE completes, according to the third uplink pilot sequence, estimation of the crosstalk caused by the showtime line for the joining line.

Specifically, the VCE 11 first sends the second notification message to the second FTU-O 12 on the showtime line. The second FTU-O 12 forwards the second notification message to the second FTU-R 13. For example, the second notification message may be sent to the second FTU-R 13 on the showtime line at the downlink transmission time in the super frame.

S109. The second FTU-R 13 modifies the uplink pilot sequence.

Specifically, after receiving the second notification message, the second FTU-R can determine that the first FTU-O on the joining line completes the synchronization symbol detection.

In this case, the second FTU-R 13 modifies the second uplink pilot sequence to the third uplink pilot sequence according to the received second notification message. At least one element 1 or -1 exists in the third uplink pilot sequence.
S110. The second FTU-R 13 sends a third uplink pilot sequence to the second FTU-O 12. When the second FTU-R sends the third uplink pilot sequence, the first FTU-R on the joining line sends the joining uplink pilot sequence to the first FTU-O on the joining line.
S111. The VCE 11 performs channel estimation. Specifically, the VCE 11 obtains, by using calculation according to a plurality of uplink pilot sequences that are of the showtime line and that include a non-zero element, the crosstalk caused by the showtime line for the joining line, so as to complete the channel estimation, and cancel all crosstalk caused by the showtime line for the joining line.

Therefore, when the crosstalk caused by the showtime line for the joining line cannot be estimated according to the second uplink pilot sequence, after determining that the central office transceiver on the joining line completes the pilot sequence detection, the VCE sends the second notification message to the subscriber side transceiver on the showtime line. The subscriber side transceiver modifies the second uplink pilot sequence to the third uplink pilot sequence according to the second notification message. At least one element 1 or -1 exists in the third uplink pilot sequence. Then, the VCE completes the estimation of the crosstalk caused by the showtime line for the joining line.

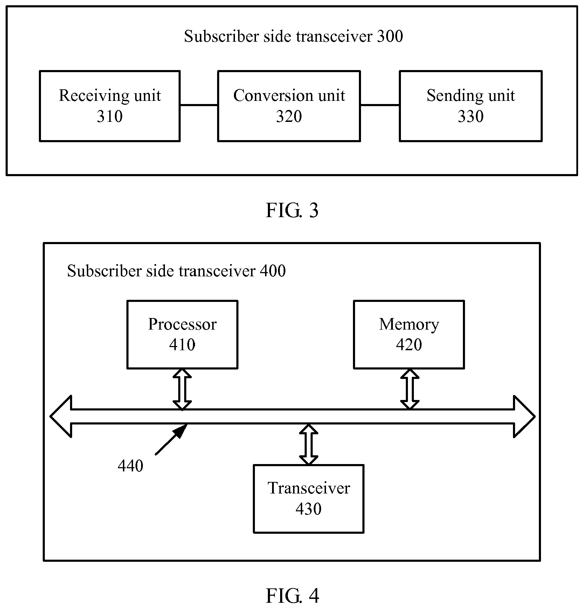

In this embodiment of the present invention, before the initialization of the joining line enters the R-VECTOR 1 phase, the VCE instructs, by sending the first notification message, the subscriber side transceiver on the showtime line to convert the first uplink pilot sequence into the second uplink pilot sequence. In this way, when the joining line enters the R-VECTOR 1 phase, a pilot sequence that is of the showtime line and that is corresponding to a location of some non-zero pilot elements of the joining line is 0, and crosstalk suffered when the central office transceiver on the joining line detects the uplink pilot signal is reduced, so that noise can be reduced, a signal-to-noise ratio can be increased, and strength of detecting a synchronization symbol by the central office transceiver on the joining line can be further improved. FIG. 3 is a block diagram of a subscriber side transceiver 300 for digital subscriber line initialization according to an embodiment of the present invention. The subscriber side transceiver 300 includes:
a receiving unit 310, configured to receive a first notification message sent by a VCE, where the first notification message includes first indication information, the first indication information indicates at least one first index, and an element of the at least one first index in a joining uplink pilot sequence that needs to be sent by a transceiver that is on a joining line and at a peer end of the VCE is 1 or -1;
a conversion unit 320, configured to convert, according to the first notification message, a first uplink pilot sequence that needs to be sent by the subscriber side transceiver into a second uplink pilot sequence, where an element of the at least one first index in the second uplink pilot sequence is zero; and
a sending unit 330, configured to send the second uplink pilot sequence to a central office transceiver on a showtime line.

Therefore, in this embodiment of the present invention, before initialization of the joining line enters an R-VECTOR 1 phase, the VCE instructs, by sending the first notification message, the subscriber side transceiver on the showtime line to convert the first uplink pilot sequence into the second uplink pilot sequence. In this way, when the joining line enters the R-VECTOR 1 phase, a pilot sequence that is of the showtime line and that is corresponding to a location of some non-zero pilot elements of the joining line is 0, and crosstalk suffered when the central office transceiver on the joining line detects an uplink pilot signal is reduced, so that noise can be reduced, a signal-to-noise ratio can be increased, and strength of detecting a synchronization symbol by the central office transceiver on the joining line can be further improved. Optionally, the conversion unit 320 is specifically configured to: modify a non-zero element of the at least one first index in the first uplink pilot sequence to zero according to the first indication information.

Optionally, the first notification message received by the receiving unit 310 further includes second indication information, the second indication information indicates at least one second index, and an element of the at least one second index in the joining uplink pilot sequence is zero. The conversion unit is specifically configured to: modify a non-zero element of the at least one first index in the first uplink pilot sequence to zero according to the first indication information; and modify an element zero of the at least one second index in the first uplink pilot sequence to 1 or -1 according to the second indication information.

Optionally, the at least one second index includes indexes of all or some elements zero in the joining uplink pilot sequence.

Optionally, the at least one first index includes indexes of all or some non-zero elements in the joining uplink pilot sequence.

In this way, the second uplink pilot sequence includes a non-zero element, and the VCE can complete, according to the second uplink pilot sequence, estimation of crosstalk caused by the showtime line for the joining line.

Optionally, the receiving unit 310 is further configured to receive a second notification message sent by the VCE; the conversion unit 320 is further configured to convert the second uplink pilot sequence into a third uplink pilot sequence according to the second notification message, where at least one element 1 or -1 exists in the third uplink pilot sequence; and the sending unit 330 is further configured to send the third uplink pilot sequence to the central office transceiver.

Therefore, when the crosstalk caused by the showtime line for the joining line cannot be estimated according to the second uplink pilot sequence, after determining that the central office transceiver on the joining line completes pilot sequence detection, the VCE sends the second notification message to the subscriber side transceiver on the showtime line. The subscriber side transceiver modifies the second uplink pilot sequence to the third uplink pilot sequence according to the second notification message. At least one element 1 or -1 exists in the third uplink pilot sequence. Then, the VCE completes the estimation of the crosstalk caused by the showtime line for the joining line.

It should be noted that, in this embodiment of the present invention, the conversion unit 320 may be implemented by a processor, and the receiving unit 310 and the sending unit 330 may be implemented by a transceiver. As shown in FIG. 4, the subscriber side transceiver 400 may include a processor 410, a memory 420, a transceiver 430, and a bus system 440. The memory 420 may be configured to store code or the like executed by the processor 410.

Components of the subscriber side transceiver 400 are coupled together by using the bus system 440. In addition to a data bus, the bus system 440 further includes a power bus, a control bus, and a status signal bus.

The subscriber side transceiver 300 shown in FIG. 3 and the subscriber side transceiver 400 shown in FIG. 4 can implement all processes of the second FTU-R 13 in the method embodiment shown in FIG. 2. To avoid repetition, details are not described herein again.

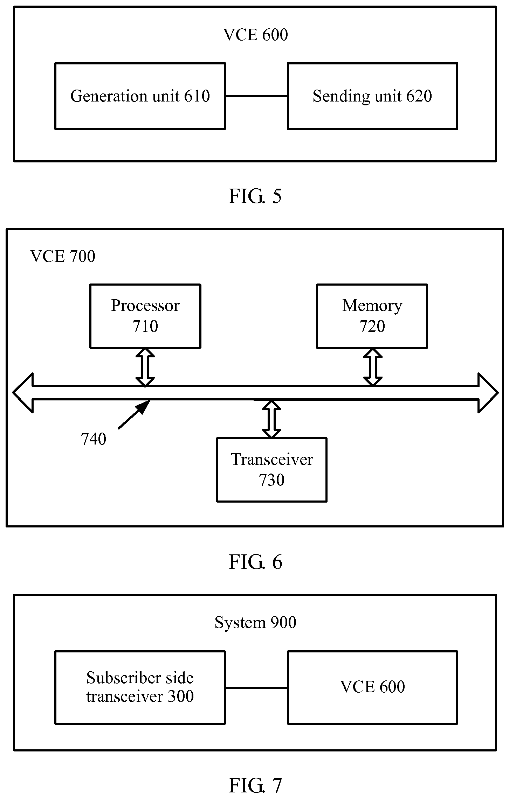

FIG. 5 is a block diagram of a VCE 600 for digital subscriber line initialization according to an embodiment of the present invention. The VCE 600 includes a generation unit 610 and a sending unit 620.

The generation unit 610 is configured to generate first indication information, where the first indication information indicates at least one first index, and an element of the at least one first index in a joining uplink pilot sequence that needs to be sent by a transceiver that is on a joining line and at a peer end of the VCE is 1 or -1.

When it is determined that initialization of the joining line enters a channel discovery phase, the generation unit 610 is further configured to generate a first notification message according to the first indication information, where the first notification message is used to instruct a subscriber side transceiver to convert a first uplink pilot sequence into a second uplink pilot sequence, the subscriber side transceiver is a transceiver that is on a showtime line and at the peer end of the VCE, and an element of the at least one first index in the second uplink pilot sequence is zero.

The sending unit 620 is configured to send the first notification message to the subscriber side transceiver.

Therefore, in this embodiment of the present invention, before the initialization of the joining line enters an R-VECTOR 1 phase, the VCE instructs, by sending the first notification message, the subscriber side transceiver on the showtime line to convert the first uplink pilot sequence into the second uplink pilot sequence. In this way, when the joining line enters the R-VECTOR 1 phase, a pilot sequence that is of the showtime line and that is corresponding to a location of some non-zero pilot elements of the joining line is 0, and crosstalk suffered when a central office transceiver on the joining line detects an uplink pilot signal is reduced, so that noise can be reduced, a signal-to-noise ratio can be increased, and strength of detecting a synchronization symbol by the central office transceiver on the joining line can be further improved. Optionally, that the first notification message generated by the generation unit 610 is used to instruct a subscriber side transceiver on a showtime line to convert a first uplink pilot sequence into a second uplink pilot sequence includes: the first indication information in the first notification message is used to instruct the subscriber side transceiver to modify a non-zero element of the at least one first index in the first uplink pilot sequence to zero.

Optionally, the generation unit 610 is further configured to: generate second indication information, where the second indication information indicates at least one second index, and an element of the at least one second index in the joining uplink pilot sequence is zero; and that the generation unit 610 generates a first notification message is specifically: generating the first notification message according to the first indication information and the second indication information, where the first indication information in the first notification message is used to instruct the subscriber side transceiver to modify a non-zero element of the at least one first index in the first uplink pilot sequence to zero, and the second indication information in the first notification message is used to instruct the subscriber side transceiver to modify an element zero of the at least one second index in the first uplink pilot sequence to 1 or -1.

Optionally, the at least one second index includes indexes of all or some elements zero in the joining uplink pilot sequence.

Optionally, the at least one first index includes indexes of all or some non-zero elements in the joining uplink pilot sequence.

In this way, the second uplink pilot sequence includes a non-zero element, and the VCE can complete, according to the second uplink pilot sequence, estimation of crosstalk caused by the showtime line for the joining line.

Optionally, the generation unit 610 is further configured to generate a second notification message, where the second notification message is used to instruct the subscriber side transceiver to convert the second uplink pilot sequence to a third uplink pilot sequence, and at least one element 1 or -1 exists in the third uplink pilot sequence; and the sending unit 620 is further configured to send the second notification message to the subscriber side transceiver.

Optionally, before the generation unit 610 generates the second notification message, the VCE includes a receiving unit configured to receive third indication information sent by the central office transceiver on the joining line, where the third indication information is used to instruct the central office transceiver to complete pilot sequence detection.

Therefore, when the crosstalk caused by the showtime line for the joining line cannot be estimated according to the second uplink pilot sequence, after determining that the central office transceiver on the joining line completes the pilot sequence detection, the VCE sends the second notification message to the subscriber side transceiver on the showtime line. The subscriber side transceiver modifies the second uplink pilot sequence to the third uplink pilot sequence according to the second notification message. At least one element 1 or -1 exists in the third uplink pilot sequence. Then, the VCE completes the estimation of the crosstalk caused by the showtime line for the joining line.

It should be noted that, in this embodiment, the generation unit 610 may be implemented by a processor, and the sending unit 620 may be implemented by a transceiver. As shown in FIG. 6, a VCE 700 may include a processor 710, a memory 720, a transceiver 730, and a bus system 740. The memory 720 may be configured to store code or the like executed by the processor 710.

The VCE 600 shown in FIG. 5 or the VCE 700 shown in FIG. 6 can implement all processes performed by the VCE 11 in the method embodiment shown in FIG. 2. The subscriber side transceiver on the showtime line may be the second FTU-R 13 in FIG. 2. The central office transceiver on the joining line may be the first FTU-O in the method 100. To avoid repetition, details are not described herein again.

An embodiment of the present invention further provides a system. As shown in FIG. 7, the system 900 includes:
the subscriber side transceiver 300 in the embodiments of the present invention and the vectoring control entity VCE 600 in the embodiments of the present invention.

It should be noted that the foregoing method embodiment of the present invention may be applied to a processor, or implemented by a processor. The processor may be an integrated circuit chip and have a signal processing capability. In an implementation process, steps in the foregoing method embodiments can be implemented by using a hardware integrated logical circuit in the processor, or by using instructions in a form of software. The processor may be a general purpose processor, a digital signal processor (DSP), an application-specific integrated circuit (ASIC), a field programmable gate array (FPGA) or another programmable logical device, a discrete gate or transistor logic device, or a discrete hardware component. It may implement or perform the methods, the steps, and logical block diagrams that are disclosed in the embodiments of the present invention. The general purpose processor may be a microprocessor or the processor may be any normal processor, or the like. Steps of the methods disclosed with reference to the embodiments of the present invention may be directly executed and accomplished by using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, a register, or the like. The storage medium is located in the memory, and a processor reads information in the memory and completes the steps in the foregoing methods in combination with hardware of the processor.

It may be understood that the memory in the embodiments of the present invention may be a volatile memory or a nonvolatile memory, or may include a volatile memory and a nonvolatile memory. The nonvolatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM), used as an external cache. Through example but not limitative description, many forms of RAMs may be used, for example, a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchlink dynamic random access memory (SLDRAM), and a direct rambus dynamic random access memory (DR RAM). It should be noted that the memory of the systems and methods described in this specification includes but is not limited to these and any memory of another proper type.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms. The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM), a random access memory (RAM), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for digital subscriber line initialization, comprising:
receiving, by a subscriber side transceiver on a showtime line (13), a first notification message sent by a vectoring control entity, VCE, (11) wherein the first notification message comprises first indication information, the first indication information indicates at least one first index, and the at least one first index is used to indicate that an element of the at least one first index in a joining uplink pilot sequence of a subscriber side transceiver on a joining line is 1 or -1;
converting (S103) a first uplink pilot sequence of the subscriber side transceiver on the showtime line into a second uplink pilot sequence according to the first notification message, wherein an element of the at least one first index in the second uplink pilot sequence is zero; and
sending (S105) the second uplink pilot sequence to a central office transceiver (12) on the showtime line,
wherein the converting a first uplink pilot sequence of the subscriber side transceiver on the showtime line into a second uplink pilot sequence according to the first notification message comprises:
modifying a non-zero element of the at least one first index in the first uplink pilot sequence to zero according to the first indication information.

2. The method according to claim 1, wherein the first notification message further comprises second indication information, the second indication information indicates at least one second index, the at least one second index is used to indicate that an element of the at least one second index in the joining uplink pilot sequence is zero; and
the converting a first uplink pilot sequence of the subscriber side transceiver on the showtime line into a second uplink pilot sequence according to the first notification message further comprises:
modifying an element zero of the at least one second index in the first uplink pilot sequence to 1 or -1 according to the second indication information.

3. The method according to claim 2, wherein the at least one second index comprises indexes of all or some elements zero in the joining uplink pilot sequence.

4. A method for digital subscriber line initialization, comprising:
generating (S101), by a vectoring control entity, VCE, first indication information, wherein the first indication information indicates at least one first index, and the at least one first index is used to indicate that an element of the at least one first index in a joining uplink pilot sequence of a subscriber side transceiver on a joining line is 1 or -1;
when it is determined that initialization of the joining line enters a channel discovery phase, generating (S102) a first notification message according to the first indication information, wherein the first notification message is used to instruct a subscriber side transceiver on a showtime line to convert (S104) a first uplink pilot sequence into a second uplink pilot sequence, and an element of the at least one first index in the second uplink pilot sequence is zero; and
sending (S103) the first notification message to the subscriber side transceiver on the showtime line,
wherein that the first notification message is used to instruct a subscriber side transceiver on a showtime line to convert a first uplink pilot sequence into a second uplink pilot sequence comprises:
the first indication information in the first notification message is used to instruct the subscriber side transceiver on the showtime line to modify a non-zero element of the at least one first index in the first uplink pilot sequence to zero.

5. The method according to claim 4, wherein the method further comprises:
generating second indication information, wherein the second indication information indicates at least one second index, and the at least one second index is used to indicate that an element of the at least one second index in the joining uplink pilot sequence is zero; and
the generating a first notification message comprises: generating the first notification message according to the first indication information and the second indication information, wherein the second indication information in the first notification message is used to instruct the subscriber side transceiver on the showtime line to modify an element zero of the at least one second index in the first uplink pilot sequence to 1 or -1.

6. The method according to claim 5, wherein the at least one second index comprises indexes of all or some elements zero in the joining uplink pilot sequence.

7. A subscriber side transceiver (300) for digital subscriber line initialization, wherein the subscriber side transceiver (300) is on a showtime line and comprises:
a receiving unit (310), configured to receive a first notification message sent by a vectoring control entity, VCE, (600) wherein the first notification message comprises first indication information, the first indication information indicates at least one first index, and the at least one first index is used to indicate that an element of the at least one first index in a joining uplink pilot sequence of a subscriber side transceiver on a joining line is 1 or -1;
a conversion unit (320), configured to convert a first uplink pilot sequence of the subscriber side transceiver on the showtime line into a second uplink pilot sequence according to the first notification message, wherein an element of the at least one first index in the second uplink pilot sequence is zero; and
a sending unit (330), configured to send the second uplink pilot sequence to a central office transceiver on the showtime line,
wherein the conversion unit is specifically configured to:
modify a non-zero element of the at least one first index in the first uplink pilot sequence to zero according to the first indication information.

8. The subscriber side transceiver according to claim 7, wherein the first notification message received by the receiving unit further comprises second indication information, the second indication information indicates at least one second index, and the at least one second index is used to indicate that an element of the at least one second index in the joining uplink pilot sequence is zero; and
the conversion unit is specifically configured to: modify an element zero of the at least one second index in the first uplink pilot sequence to 1 or -1 according to the second indication information.

9. The subscriber side transceiver according to claim 8, wherein the at least one second index comprises indexes of all or some elements zero in the joining uplink pilot sequence.

10. A vectoring control entity, VCE, (600) for digital subscriber line initialization, comprising:
a generation unit (610), configured to generate first indication information, wherein the first indication information indicates at least one first index, and the at least one first index is used to indicate that an element of the at least one first index in a joining uplink pilot sequence of a subscriber side transceiver on a joining line is 1 or -1, wherein
the generation unit is further configured to: when it is determined that initialization of the joining line enters a channel discovery phase, generate a first notification message according to the first indication information, wherein the first notification message is used to instruct a subscriber side transceiver on a showtime line to convert a first uplink pilot sequence into a second uplink pilot sequence, and the at least one first index indicates that an element of the at least one first index in the second uplink pilot sequence is zero; and
a sending unit (620), configured to send the first notification message to the subscriber side transceiver on the showtime line,
wherein that the first notification message generated by the generation unit is used to instruct a subscriber side transceiver on a showtime line to convert a first uplink pilot sequence into a second uplink pilot sequence comprises:
the first indication information in the first notification message is used to instruct the subscriber side transceiver on the showtime line to modify a non-zero element of the at least one first index in the first uplink pilot sequence to zero.

11. The VCE according to claim 10, wherein the generation unit is further configured to:
generate second indication information, wherein the second indication information indicates at least one second index, and the at least one second index is used to indicate that an element of the at least one second index in the joining uplink pilot sequence is zero; and
that the generation unit generates a first notification message is specifically: generating the first notification message according to the first indication information and the second indication information, wherein the second indication information in the first notification message is used to instruct the subscriber side transceiver on the showtime line to modify an element zero of the at least one second index in the first uplink pilot sequence to 1 or -1.

## Patentansprüche

1. Verfahren zum Initialisieren einer digitalen Teilnehmerleitung, umfassend:
Empfangen, durch einen teilnehmerseitigen Transceiver auf einer "Showtime"-Leitung (13), einer durch eine Vektorisierungssteuerungsentität, VCE, (11) gesendeten ersten Benachrichtigungsnachricht, wobei die erste Benachrichtigungsnachricht erste Angabeinformationen enthält, die ersten Angabeinformationen mindestens einen ersten Index angeben und der mindestens eine erste Index verwendet wird zum Angeben, dass ein Element des mindestens einen ersten Indexes in einer Anschluss-Uplink-Pilotsequenz eines teilnehmerseitigen Transceivers auf einer Anschlussleitung 1 oder -1 ist;
Umwandeln (S103) einer ersten Uplink-Pilotsequenz des teilnehmerseitigen Transceivers auf der "Showtime"-Leitung in eine zweite Uplink-Pilotsequenz gemäß der ersten Benachrichtigungsnachricht, wobei ein Element des mindestens einen ersten Indexes in der zweiten Uplink-Pilotsequenz null ist; und
Senden (S105) der zweiten Uplink-Pilotsequenz an einen Zentralentransceiver (12) auf der "Showtime"-Leitung,
wobei das Umwandeln einer ersten Uplink-Pilotsequenz des teilnehmerseitigen Transceivers auf der "Showtime"-Leitung in eine zweite Uplink-Pilotsequenz gemäß der ersten Benachrichtigungsnachricht Folgendes umfasst:
Modifizieren eines Nicht-Null-Elements des mindestens einen ersten Indexes in der ersten Uplink-Pilotsequenz auf null gemäß den ersten Angabeinformationen.

2. Verfahren nach Anspruch 1, wobei die erste Benachrichtigungsnachricht ferner zweite Angabeinformationen enthält, die zweiten Angabeinformationen mindestens einen zweiten Index angeben und der mindestens eine zweite Index verwendet wird zum Angeben, dass ein Element des mindestens einen zweiten Indexes in der Anschluss-Uplink-Pilotsequenz null ist; und
das Umwandeln einer ersten Uplink-Pilotsequenz des teilnehmerseitigen Transceivers auf der "Showtime"-Leitung in eine zweite Uplink-Pilotsequenz gemäß der ersten Benachrichtigungsnachricht ferner Folgendes umfasst:
Modifizieren eines Null-Elements des mindestens einen zweiten Indexes in der ersten Uplink-Pilotsequenz auf 1 oder -1 gemäß den zweiten Angabeinformationen.

3. Verfahren nach Anspruch 2, wobei der mindestens eine zweite Index Indices von allen oder einigen Null-Elementen in der Anschluss-Uplink-Pilotsequenz umfasst.

4. Verfahren zum Initialisieren einer digitalen Teilnehmerleitung, umfassend:
Erzeugen (S101), durch eine Vektorisierungssteuerungsentität, VCE, von ersten Angabeinformationen, wobei die ersten Angabeinformationen mindestens einen ersten Index angeben und der mindestens eine erste Index verwendet wird zum Angeben, dass ein Element des mindestens einen ersten Indexes in einer Anschluss-Uplink-Pilotsequenz eines teilnehmerseitigen Transceivers auf einer Anschlussleitung 1 oder -1 ist;
wenn bestimmt wird, dass Initialisieren der Anschlussleitung in eine Kanalentdeckungsphase eintritt, Erzeugen (S102) einer ersten Benachrichtigungsnachricht gemäß den ersten Angabeinformationen, wobei die erste Benachrichtigungsnachricht verwendet wird zum Anweisen eines teilnehmerseitigen Transceivers auf einer "Showtime"-Leitung zum Umwandeln (S104) einer ersten Uplink-Pilotsequenz in eine zweite Uplink-Pilotsequenz und ein Element des mindestens einen ersten Indexes in der zweiten Uplink-Pilotsequenz null ist; und Senden (S103) der ersten Benachrichtigungsnachricht an den teilnehmerseitigen Transceiver auf der "Showtime"-Leitung,
wobei, dass die erste Benachrichtigungsnachricht verwendet wird zum Anweisen eines teilnehmerseitigen Transceivers auf einer "Showtime"-Leitung zum Umwandeln einer ersten Uplink-Pilotsequenz in eine zweite Uplink-Pilotsequenz, Folgendes umfasst:
die ersten Angabeinformationen werden in der ersten Benachrichtigungsnachricht verwendet zum Anweisen des teilnehmerseitigen Transceivers auf der "Showtime"-Leitung zum Modifizieren eines Nicht-Null-Elements des mindestens einen ersten Indexes in der ersten Uplink-Pilotsequenz auf null.

5. Verfahren nach Anspruch 4, wobei das Verfahren ferner Folgendes umfasst:
Erzeugen von zweiten Angabeinformationen, wobei die zweiten Angabeinformationen mindestens einen zweiten Index angeben und der mindestens eine zweite Index verwendet wird zum Angeben, dass ein Element des mindestens einen zweiten Indexes in der Anschluss-Uplink-Pilotsequenz null ist; und
das Erzeugen einer ersten Benachrichtigungsnachricht Folgendes umfasst: Erzeugen der ersten Benachrichtigungsnachricht gemäß den ersten Angabeinformationen und den zweiten Angabeinformationen, wobei die zweiten Angabeinformationen in der ersten Benachrichtigungsnachricht verwendet werden zum Anweisen des teilnehmerseitigen Transceivers auf der "Showtime"-Leitung zum Modifizieren eines Null-Elements des mindestens einen zweiten Indexes in der ersten Uplink-Pilotsequenz auf 1 oder -1.

6. Verfahren nach Anspruch 5, wobei der mindestens eine zweite Index Indices von allen oder einigen Null-Elementen in der Anschluss-Uplink-Pilotsequenz umfasst.

7. Teilnehmerseitiger Transceiver (300) zum Initialisieren einer digitalen Teilnehmerleitung, wobei sich der teilnehmerseitige Transceiver (300) auf einer "Showtime"-Leitung befindet und Folgendes umfasst:
eine Empfangseinheit (310), ausgelegt zum Empfangen einer durch eine Vektorisierungssteuerungsentität, VCE, (600) gesendeten ersten Benachrichtigungsnachricht, wobei die erste Benachrichtigungsnachricht erste Angabeinformationen enthält, die ersten Angabeinformationen mindestens einen ersten Index angeben und der mindestens eine erste Index verwendet wird zum Angeben, dass ein Element des mindestens einen ersten Indexes in einer Anschluss-Uplink-Pilotsequenz eines teilnehmerseitigen Transceivers auf einer Anschlussleitung 1 oder -1 ist;
eine Umwandlungseinheit (320), ausgelegt zum Umwandeln einer ersten Uplink-Pilotsequenz des teilnehmerseitigen Transceivers auf der "Showtime"-Leitung in eine zweite Uplink-Pilotsequenz gemäß der ersten Benachrichtigungsnachricht, wobei ein Element des mindestens einen ersten Indexes in der zweiten Uplink-Pilotsequenz null ist; und
eine Sendeeinheit (330), ausgelegt zum Senden der zweiten Uplink-Pilotsequenz an einen Zentralentransceiver auf der "Showtime"-Leitung,
wobei die Umwandlungseinheit insbesondere ausgelegt ist zum:
Modifizieren eines Nicht-Null-Elements des mindestens einen ersten Indexes in der ersten Uplink-Pilotsequenz auf null gemäß den ersten Angabeinformationen.

8. Teilnehmerseitiger Transceiver nach Anspruch 7, wobei die durch die Empfangseinheit empfangene erste Benachrichtigungsnachricht ferner zweite Angabeinformationen enthält, die zweiten Angabeinformationen mindestens einen zweiten Index angeben und der mindestens eine zweite Index verwendet wird zum Angeben, dass ein Element des mindestens einen zweiten Indexes in der Anschluss-Uplink-Pilotsequenz null ist; und
die Umwandlungseinheit insbesondere ausgelegt ist zum:
Modifizieren eines Null-Elements des mindestens einen zweiten Indexes in der ersten Uplink-Pilotsequenz auf 1 oder -1 gemäß den zweiten Angabeinformationen.

9. Teilnehmerseitiger Transceiver nach Anspruch 8, wobei der mindestens eine zweite Index Indices von allen oder einigen Null-Elementen in der Anschluss-Uplink-Pilotsequenz umfasst.

10. Vektorisierungssteuerungsentität, VCE, (600) zum Initialisieren einer digitalen Teilnehmerleitung, umfassend:
eine Erzeugungseinheit (610), ausgelegt zum Erzeugen von ersten Angabeinformationen, wobei die ersten Angabeinformationen mindestens einen ersten Index angeben und der mindestens eine erste Index verwendet wird zum Angeben, dass ein Element des mindestens einen ersten Indexes in einer Anschluss-Uplink-Pilotsequenz eines teilnehmerseitigen Transceivers auf einer Anschlussleitung 1 oder -1 ist, wobei
die Erzeugungseinheit ferner ausgelegt ist zum: wenn bestimmt wird, dass Initialisieren der Anschlussleitung in eine Kanalentdeckungsphase eintritt, Erzeugen einer ersten Benachrichtigungsnachricht gemäß den ersten Angabeinformationen, wobei die erste Benachrichtigungsnachricht verwendet wird zum Anweisen eines teilnehmerseitigen Transceivers auf einer "Showtime"-Leitung zum Umwandeln einer ersten Uplink-Pilotsequenz in eine zweite Uplink-Pilotsequenz, und wobei der mindestens eine erste Index angibt, dass ein Element des mindestens einen erste Indexes in der zweiten Uplink-Pilotsequenz null ist; und
eine Sendeeinheit (620), ausgelegt zum Senden der ersten Benachrichtigungsnachricht an den teilnehmerseitigen Transceiver auf der "Showtime"- Leitung,
wobei, dass die durch die Erzeugungseinheit erzeugte erste Benachrichtigungsnachricht verwendet wird zum Anweisen eines teilnehmerseitigen Transceivers auf einer "Showtime"-Leitung zum Umwandeln einer ersten Uplink-Pilotsequenz in eine zweite Uplink-Pilotsequenz, Folgendes umfasst:
die ersten Angabeinformationen werden in der ersten Benachrichtigungsnachricht verwendet zum Anweisen des teilnehmerseitigen Transceivers auf der "Showtime"-Leitung zum Modifizieren eines Nicht-Null-Elements des mindestens einen ersten Indexes in der ersten Uplink-Pilotsequenz auf null.

11. VCE nach Anspruch 10, wobei die Erzeugungseinheit ferner ausgelegt ist zum:
Erzeugen von zweiten Angabeinformationen, wobei die zweiten Angabeinformationen mindestens einen zweiten Index angeben und der mindestens eine zweite Index verwendet wird zum Angeben, dass ein Element des mindestens einen zweiten Indexes in der Anschluss-Uplink-Pilotsequenz null ist; und
dass die Erzeugungseinheit eine erste Benachrichtigungsnachricht erzeugt, insbesondere Folgendes bedeutet: Erzeugen der ersten Benachrichtigungsnachricht gemäß den ersten Angabeinformationen und den zweiten Angabeinformationen, wobei die zweiten Angabeinformationen in der ersten Benachrichtigungsnachricht verwendet werden zum Anweisen des teilnehmerseitigen Transceivers auf der "Showtime"-Leitung zum Modifizieren eines Null-Elements des mindestens einen zweiten Indexes in der ersten Uplink-Pilotsequenz auf 1 oder -1.

## Revendications

1. Procédé pour une initialisation de ligne d'abonné numérique DSL, comprenant les étapes suivantes :
recevoir, par un émetteur-récepteur côté abonné sur une ligne de showtime (13), un premier message de notification envoyé par une entité de contrôle de vectorisation, VCE (11), le premier message de notification comportant des premières informations d'indication, les premières informations d'indication indiquant au moins un premier index, et ledit premier index étant utilisé pour indiquer qu'un élément dudit au moins un premier index dans une séquence pilote de liaison montante de jonction d'un émetteur-récepteur côté abonné sur une ligne de jonction est 1 ou -1 ;
convertir (S103) une première séquence pilote de liaison montante de l'émetteur-récepteur côté abonné sur la ligne de showtime en une deuxième séquence pilote de liaison montante selon le premier message de notification, un élément dudit au moins un premier index dans la deuxième séquence pilote de liaison montante étant zéro ; et envoyer (S105) la deuxième séquence pilote de liaison montante à un émetteur-récepteur de central téléphonique (12) sur la ligne de showtime,
l'étape de conversion d'une première séquence pilote de liaison montante de l'émetteur-récepteur côté abonné sur la ligne de showtime en une deuxième séquence pilote de liaison montante selon le premier message de notification comprenant : modifier un élément non zéro dudit premier index dans la première séquence pilote de liaison montante en zéro selon les premières informations d'indication.

2. Procédé selon la revendication 1, dans lequel le premier message de notification comprend en outre des deuxièmes informations d'indication, les deuxièmes informations d'indication indiquent au moins un deuxième index, ledit deuxième index est utilisé pour indiquer qu'un élément dudit deuxième index dans la séquence pilote de liaison montante de jonction est zéro ; et
l'étape de conversion d'une première séquence pilote de liaison montante de l'émetteur-récepteur côté abonné sur la ligne de showtime en une deuxième séquence pilote de liaison montante selon le premier message de notification comprend en outre :
modifier un élément zéro dudit deuxième index dans la première séquence pilote de liaison montante en 1 ou -1 selon les deuxièmes informations d'indication.

3. Procédé selon la revendication 2, dans lequel ledit deuxième index comprend des index de la totalité ou d'une partie des éléments zéro dans la séquence pilote de liaison montante de jonction.

4. Procédé pour une initialisation de ligne d'abonné numérique DSL, comprenant :
générer (S101), par une entité de contrôle de vectorisation, VCE, des premières informations d'indication, les premières informations d'indication indiquant au moins un premier index, et ledit premier index étant utilisé pour indiquer qu'un élément dudit au moins un premier index dans une séquence pilote de liaison montante de jonction d'un émetteur-récepteur côté abonné sur une ligne de jonction est 1 ou -1 ; lorsqu'il est déterminé qu'une initialisation de la ligne de jonction entre dans une phase de découverte de canal, générer (S102) un premier message de notification selon les premières informations d'indication, le premier message de notification étant utilisé pour ordonner à un émetteur-récepteur côté abonné sur une ligne de showtime de convertir (S104) une première séquence pilote de liaison montante en une deuxième séquence pilote de liaison montante, et un élément dudit au moins un premier index dans la deuxième séquence pilote de liaison montante étant zéro ; et envoyer (S103) le premier message de notification à l'émetteur-récepteur côté abonné sur la ligne de showtime,
l'étape dans laquelle le premier message de notification est utilisé pour ordonner à un émetteur-récepteur côté abonné sur une ligne de showtime de convertir une première séquence pilote de liaison montante en une deuxième séquence pilote de liaison montante comprenant :
les premières informations d'indication dans le premier message de notification sont utilisées pour ordonner à l'émetteur-récepteur côté abonné sur la ligne de showtime de modifier un élément non zéro dudit au moins un premier index dans la première séquence pilote de liaison montante en zéro.

5. Procédé selon la revendication 4, dans lequel le procédé comprend en outre :
générer des deuxièmes informations d'indication, les deuxièmes informations d'indication indiquant au moins un deuxième index, et ledit au moins un deuxième index étant utilisé pour indiquer qu'un élément dudit au moins un deuxième index dans la séquence pilote de liaison montante de jonction est zéro ; et
l'étape de génération d'un premier message de notification comprend : générer le premier message de notification selon les premières informations d'indication et les deuxièmes informations d'indication, les deuxièmes informations d'indication dans le premier message de notification étant utilisées pour ordonner à l'émetteur-récepteur côté abonné sur la ligne de showtime de modifier un élément zéro dudit au moins un deuxième index dans la première séquence pilote de liaison montante en 1 ou -1.

6. Procédé selon la revendication 5, dans lequel ledit au moins un deuxième index comprend des index de la totalité ou d'une partie des éléments zéro dans la séquence pilote de liaison montante de jonction.

7. Emetteur-récepteur côté abonné (300) pour une initialisation de ligne d'abonné numérique DSL, dans lequel l'émetteur-récepteur côté abonné (300) est sur une ligne de showtime et comprend :
une unité de réception (310), configurée pour recevoir un premier message de notification envoyé par une entité de contrôle de vectorisation, VCE (600), le premier message de notification comportant des premières informations d'indication, les premières informations d'indication indiquant au moins un premier index, et ledit au moins un premier index étant utilisé pour indiquer qu'un élément dudit au moins un premier index dans une séquence pilote de liaison montante de jonction d'un émetteur-récepteur côté abonné sur une ligne de jonction est 1 ou -1 ;
une unité de conversion (320), configurée pour convertir une première séquence pilote de liaison montante de l'émetteur-récepteur côté abonné sur la ligne de showtime en une deuxième séquence pilote de liaison montante selon le premier message de notification, un élément dudit au moins un premier index dans la deuxième séquence pilote de liaison montante étant zéro ; et
une unité d'envoi (330), configurée pour envoyer la deuxième séquence pilote de liaison montante à un émetteur-récepteur de central téléphonique sur la ligne de showtime,
l'unité de conversion étant configurée spécifiquement pour :
modifier un élément non zéro dudit au moins un premier index dans la première séquence pilote de liaison montante en zéro selon les premières informations d'indication.

8. Emetteur-récepteur côté abonné selon la revendication 7, dans lequel le premier message de notification reçu par l'unité de réception comprend en outre des deuxièmes informations d'indication, les deuxièmes informations d'indication indiquent au moins un deuxième index, et ledit au moins un deuxième index est utilisé pour indiquer qu'un élément dudit au moins un deuxième index dans la séquence pilote de liaison montante de jonction est zéro ; et
l'unité de conversion est configurée spécifiquement pour : modifier un élément zéro dudit au moins un deuxième index dans la première séquence pilote de liaison montante en 1 ou -1 selon les deuxièmes informations d'indication.

9. Emetteur-récepteur côté abonné selon la revendication 8, dans lequel ledit au moins un deuxième index comprend des index de la totalité ou d'une partie des éléments zéro dans la séquence pilote de liaison montante de jonction.

10. Entité de contrôle de vectorisation, VCE (600), pour une initialisation de ligne d'abonné numérique DSL comprenant :
une unité de génération (610), configurée pour générer des premières informations d'indication, les premières informations d'indication indiquant au moins un premier index, et ledit au moins un premier index étant utilisé pour indiquer qu'un élément dudit au moins un premier index dans une séquence pilote de liaison montante de jonction d'un émetteur-récepteur côté abonné sur une ligne de jonction est 1 ou -1 ; l'unité de génération étant en outre configurée pour : lorsqu'il est déterminé qu'une initialisation de la ligne de jonction entre dans une phase de découverte de canal, générer un premier message de notification selon les premières informations d'indication, le premier message de notification étant utilisé pour ordonner à un émetteur-récepteur côté abonné sur une ligne de showtime de convertir une première séquence pilote de liaison montante en une deuxième séquence pilote de liaison montante, et ledit au moins un premier index indiquant qu'un élément dudit au moins un premier index dans la deuxième séquence pilote de liaison montante est zéro ; et une unité d'envoi (620) configurée pour envoyer le premier message de notification à l'émetteur-récepteur côté abonné sur la ligne de showtime,
l'étape dans laquelle le premier message de notification généré par l'unité de génération est utilisé pour ordonner à un émetteur-récepteur côté abonné sur une ligne de showtime de convertir une première séquence pilote de liaison montante en une deuxième séquence pilote de liaison montante comprenant :
les premières informations d'indication dans le premier message de notification sont utilisées pour ordonner à l'émetteur-récepteur côté abonné sur la ligne de showtime de modifier un élément non zéro dudit au moins un premier index dans la première séquence pilote de liaison montante en zéro.

11. VCE selon la revendication 10, dans lequel l'unité de génération est en outre configurée pour :
générer des deuxièmes informations d'indication, les deuxièmes informations d'indication indiquant au moins un deuxième index, et ledit au moins un deuxième index étant utilisé pour indiquer qu'un élément dudit au moins un deuxième index dans la séquence pilote de liaison montante de jonction est zéro ; et
l'étape de génération d'un premier message de notification par l'unité de génération est spécifiquement : générer le premier message de notification selon les premières informations d'indication et les deuxièmes informations d'indication, les deuxièmes informations d'indication dans le premier message de notification étant utilisées pour ordonner à l'émetteur-récepteur côté abonné sur la ligne de showtime de modifier un élément zéro dudit au moins un deuxième index dans la première séquence pilote de liaison montante en 1 ou -1.
